# EUROPÄISCHE PATENTSCHRIFT

(11) **EP 0 716 958 B1**
(45) Veröffentlichungstag und Bekanntmachung des Hinweises auf die Patenterteilung: **06.05.1999**
(21) Anmeldenummer: 95118934.9
(22) Anmeldetag: 01.12.1995
(51) Int. Cl.: B60R 7/00

(54) **Ausziehbarer Einschub zum Einbau in einem Kraftfahrzeug**
Drawer for installation in a vehicle
Tiroir à monter dans un véhicule automobile

(30) Priorität: 16.12.1994 DE 4444943
(43) Veröffentlichungstag der Anmeldung: 19.06.1996
(73) Patentinhaber: fischerwerke Artur Fischer GmbH & Co. KG, D-72178 Waldachtal (DE)
(72) Erfinder: Fischer, Heinz, D-72178 Waldachtal (DE); Nienhaus, Ulrich, D-72202 Nagold (DE); Schenk, Bernd, D-72160 Horb (DE)

(56) Entgegenhaltungen:
- EP-A- 0 341 426
- DE-B- 1 078 462
- FR-A- 1 393 827
- US-A- 2 510 545
- US-A- 4 892 368
- US-A- 5 004 306
- US-A- 5 147 138

## Beschreibung

Die Erfindung betrifft eine Vorrichtung mit einem schubladenartig ausziehbaren Einschub, die zum Einbau beispielsweise im Armaturenbrett, in einer Türverkleidung oder einer Armstütze in einem Kraftwagen vorgesehen ist, mit den Merkmalen des Oberbegriffs des Anspruchs 1 (s. zum Beispiel FR-A-1 393 827, einen schubladenartig ausziehbaren Fahrzeugaschenbecher betreffend).

Derartige Vorrichtungen sind als Halter für Getränkedosen und dgl. bekannt. Der Einschub weist eine oder mehrere Einstellöffnungen zur Aufnahme von Getränkedosen auf. Wird der Halter nicht benötigt, so wird der Einschub in eine geschlossene Stellung zugeschoben und dabei an seinem Einbauort versenkt. Der Ausziehweg des Einschubs ist mittels eines Wegbegrenzers begrenzt, damit der Einschub nicht versehentlich vollständig aus der Vorrichtung herausgezogen werden kann.

Nachteilig bei den bekannten Getränkehaltern ist, daß deren Einschub nicht oder zumindest nicht ohne vorherigen Ausbau der Vorrichtung aus letzterer entfernt werden kann.

Aufgabe der Erfindung ist es, eine Vorrichtung der eingangs genannten Art so auszubilden, daß ihr Einschub einfach herausnehmbar ist und gegen einen anderen Einschub gewechselt werden kann.

Diese Aufgabe wird erfindungsgemäß durch die Merkmale des Anspruchs 1 gelöst. Die Erfindung hat den Vorteil, daß ihr Einschub einfach auswechselbar ist und dadurch schnell ein Einschub, der beispielsweise einen Getränkehalter aufweist, gegen einen eine Ablage aufweisenden Einschub getauscht werden kann. Auch das nachträgliche Einsetzen eines beispielsweise einen Telefonhalter aufweisenden Einschubs ist ohne weiteres möglich.

Um den Einschub vollständig aus der erfindungsgemäßen Vorrichtung herausziehen zu können, ist deren Wegbegrenzer bei im Kraftwagen eingebauter Vorrichtung von Hand oder mittels eines Werkzeugs, beispielsweise eines Schraubendrehers, entriegelbar.

Die erfindungsgemäße Vorrichtung weist einen Gleitstein auf, der in Ausziehrichtung des Einschubs verschiebbar geführt ist und der mit dem Einschub in Eingriff steht. Um den Einschub vollständig aus der Vorrichtung herausziehen zu können, weist diese eine Aushebeeinrichtung auf, die den bei eingebauter Vorrichtung unzugänglichen Gleitstein außer Eingriff vom Einschub bringt, wenn dieser bei entriegeltem Wegbegrenzer über die Wegbegrenzung hinaus aus der Vorrichtung herausgezogen wird. Beim Einführen des Einschubs in die Vorrichtung gelangt der in seiner Führung gehaltene Gleitstein in Eingriff mit dem Einschub, und der Wegbegrenzer rastet wieder ein.

Bei einer Ausgestaltung der Erfindung weist die Aushebeeinrichtung eine Schrägfläche oder eine gewölbte Fläche auf, die den Gleitstein vom Einschub abhebt, wenn der Gleitstein beim Herausziehen des Einschubs aus der Vorrichtung auf die Schrägfläche oder auf die gewölbte Fläche aufgleitet. Der Eingriff des Gleitsteins mit dem Einschub wird dadurch aufgelöst.

Vorzugsweise wird der geschlossene Einschub nach Betätigung einer Auslösetaste oder dgl. mittels eines Federelements geöffnet. Als Federelement besonders geeignet ist eine sog. Rollfeder. Dies ist ein bandförmiges Federelement, das sich aufgrund seiner Elastizität einrollt und als Zugfeder verwendbar ist. Eine Rollfeder hat den Vorteil, daß ihre Federkraft über den gesamten Federweg nahezu konstant ist.

Vorzugsweise greift das Federelement am Gleitstein der erfindungsgemäßen Vorrichtung an. Sie braucht dann nicht gelöst und wieder eingehängt zu werden, wenn der Einschub aus der erfindungsgemäßen Vorrichtung herausgenommen wird, da der Gleitstein in seiner Führung in der Vorrichtung verbleibt.

Die Öffnungsbewegung des Einschubs wird vorzugsweise gedämpft, insbesondere wenn der Einschub mit Hilfe des Federelements geöffnet wird. Zur Bewegungsdämpfung eignet sich ein an sich bekanntes Flüssigkeitsdämpfungselement. Dieses wird bevorzugt am Gleitstein angebracht, damit es beim vollständigen Herausnehmen des Einschubs aus der erfindungsgemäßen Vorrichtung nicht gelöst werden muß.

Bei einer vorteilhaften Ausgestaltung der Erfindung ist der Einschub in einem Gehäuse verschiebbar geführt. Die Vorrichtung läßt sich auf diese Weise als kompakte Einheit ausbilden, die gut handhabbar und in einem Kraftwagen anbringbar ist. Der Gleitstein greift bei dieser Ausführungsform durch einen Längsschlitz in einer Wand des Gehäuses hindurch in den Einschub ein.

Die Erfindung wird nachfolgend anhand eines in der Zeichnung dargestellten Ausführungsbeispiels näher erläutert. Es zeigen:
- Figur 1: eine perspektivische Darstellung einer erfindungsgemäßen Vorrichtung;
- Figur 2: eine Detaildarstellung der Vorrichtung aus Figur 1; und
- Figur 3: einen Teillängsschnitt durch die Vorrichtung aus Figur 1.

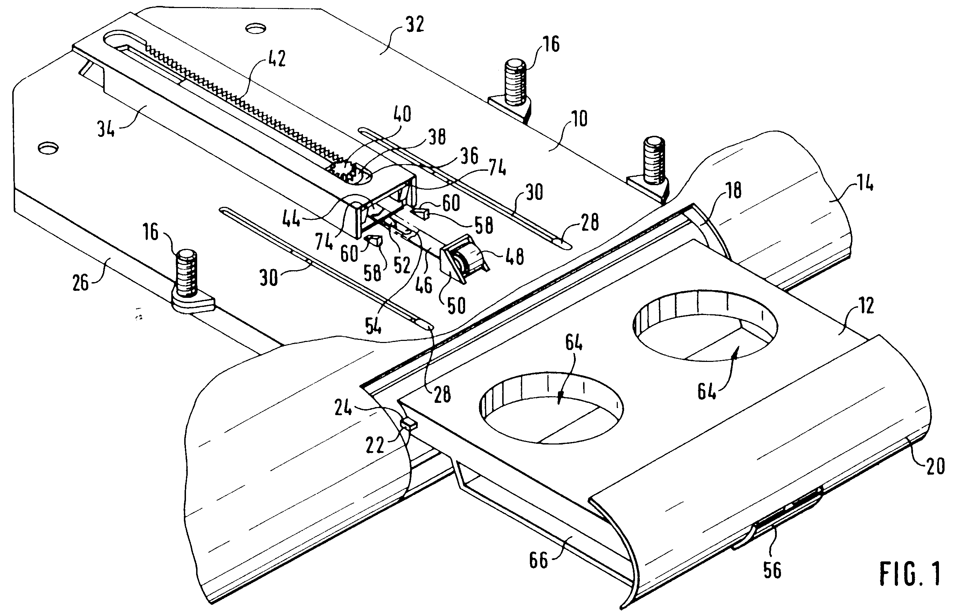

Die in Figur 1 dargestellte erfindungsgemäße Vorrichtung weist ein Gehäuse 10 auf, in dem ein Einschub 12 nach Art einer Schublade ausziehbar gelagert ist. Das Gehäuse 10 ist an einer einem Fahrgastraum abgewandten Innenseite eines Armaturenbretts 14 eines in der Zeichnung nicht dargestellten Kraftwagens mittels Schrauben 16 angebracht. Das Armaturenbrett 14 ist in Figur 1 lediglich andeutungsweise dargestellt. Es weist eine rechteckige Öffnung 18 auf, durch welche der Einschub 12 in eine, in Figur 1 dargestellte, geöffnete Stellung verschiebbar ist. Bei geschlossenem, d. h. in das Armaturenbrett 14 eingeschobenem Einschub 12 schließt eine Blende 20 an seiner vorderen Stirnseite bündig mit dem Armaturenbrett 14 ab (die geschlossene Stellung ist in der Zeichnung nicht dargestellt).

Zur verschiebbaren Führung weist der Einschub 12 zwei seitlich abstehende, in seiner Längsrichtung verlaufende Führungsstege 22 auf, die in komplementären Führungsnuten 24 geführt sind, welche sich in Seitenwänden 26 des Gehäuses 10 befinden. Der Verschiebeweg des Einschubs 12 wird von zwei von ihm nach oben abstehenden Nasen 28 begrenzt, welche in je einen beidseitig geschlossenen Längsschlitz 30 in einer oberen Wand 32 des Gehäuses 10 ragen.

Auf der oberen Wand 32 des Gehäuses 10 befindet sich eine tunnelartige, in Längsrichtung verlaufende Führung 34 rechteckigen Querschnitts. In der Führung 34 befindet sich ein Gleitstein 36, der in Ausziehrichtung des Einschubs 12 der erfindungsgemäßen Vorrichtung verschiebbar ist. In ihn ist ein an sich bekanntes Flüssigkeitsdämpfungselement 38 eingesetzt, welches ein in seiner Drehbewegung flüssigkeitsgedämpftes Zahnrad 40 aufweist. Dieses Zahnrad 40 kämmt mit einer in Ausziehrichtung des Einschubs 12 verlaufenden Zahnstange 42 an der Führung 34.

Ein abgewickeltes Ende 44 einer Rollfeder 46 steht mit dem Gleitstein 36 in Verbindung. Die Rollfeder 46 besteht aus einem elastischen Blechstreifen, der sich aufgrund seiner Elastizität von selbst zu einem Wickel 48 aufrollt und dadurch eine Zugkraft auf den Gleitstein 36 ausübt. Der Wickel 48 ist in einer Halterung 50 auf der oberen Wand 32 des Gehäuses 10 aufgenommen, die (50) zwischen der Öffnung 18 des Armaturenbretts 14 und der Führung 34 für den Gleitstein 36 angeordnet ist. Das abgewickelte Ende 44 der Rollfeder 46 ist durch einen in Figur 1 nicht sichtbaren Schlitz der Halterung 50 hindurchgeführt.

Der Gleitstein 36 weist eine nach unten abstehende Eingreifnase 52 auf, welche durch einen Längsschlitz 54 in der oberen Wand 32 des Gehäuses 10 hindurchragt und in eine, in Figur 1 nicht sichtbare Ausnehmung des Einschubs 12 eingreift. Auf diese Weise sind der Gleitstein (Gleitschuh) 36 und der Einschub 12 formschlüssig miteinander verbunden. Die Kraft der am Gleitstein 36 angreifenden Rollfeder 46 wirkt über dessen Eingreifnase 52 auf den Einschub 12 und bewegt diesen in seine geöffnete Stellung, nachdem er durch Druck auf eine Taste 56 an seiner Frontseite entriegelt worden ist. Die Verschiebebewegung des Einschubs 12 wird vom Flüssigkeitsdämpfungselement 38 gedämpft.

Um den geöffneten Einschub 12 vollständig aus dem Gehäuse 10 herauszunehmen, werden seine beiden Nasen 28 aus den Längsschlitzen 30 in der oberen Wand 32 des Gehäuses 10 herausbewegt. Dazu wird die obere Wand 32 beispielsweise mittels eines zwischen sie und die Oberseite des Einschubs 12 eingeführten Schraubendrehers - vom Einschub 12 abgedrückt, wobei sie sich elastisch verformt. Der Einschub 12 kann jetzt über seine geöffnete Stellung hinaus aus dem Gehäuse 10 herausgezogen werden.

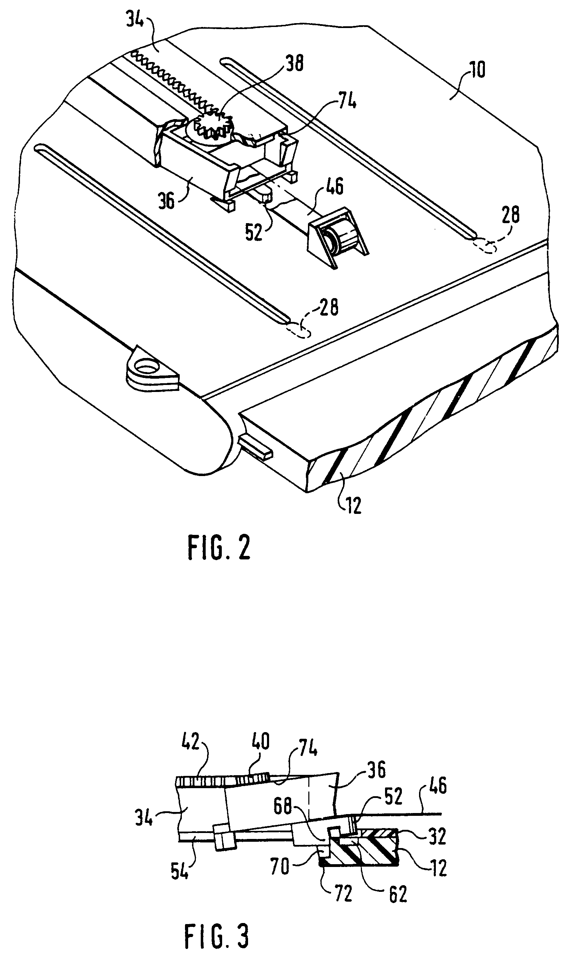

Auf der oberen Wand 32 des Gehäuses 10 befinden sich zwei Keile 58, auf die der Gleitstein 36 aufgleitet, wenn der Einschub 12 über seine in Figur 1 gezeigte, geöffnete Stellung hinaus aus dem Gehäuse 10 herausgezogen wird. Oberseiten der Keile 58 bilden Schrägflächen 60, welche den Gleitstein 36 nach oben kippen, wie dies in Figuren 2 und 3 dargestellt ist. Dabei gelangt die Eingreifnase 52 des Gleitsteins 36 außer Eingriff von der Ausnehmung 62 des Einschubs 12 (Figur 3). Die Verbindung zwischen Gleitstein 36 und Einschub 12 ist aufgehoben, der Einschub 12 kann vollständig aus dem Gehäuse 10 herausgezogen werden, wogegen der Gleitstein 36 an einem vorderen Ende seiner Führung 34 auf dem Gehäuse 10 verbleibt. Weder die Rollfeder 46 noch das Flüssigkeitsdämpfungselement 38 brauchen gelöst zu werden. Auf diese Weise läßt sich der Einschub 12 einfach und schnell gegen einen anderen Einschub auswechseln. Der im Ausführungsbeispiel dargestellte Einschub 12 ist als Halter für zwei Getränkedosen ausgebildet. Er weist zwei kreisrunde Einstellöffnungen 64 sowie einen Abstellboden 66 auf. Andere Einschübe können beispielsweise ein Ablagefach oder eine Brillenaufnahme aufweisen oder als Telefonhalter ausgebildet sein.

Der Gleitstein 36 weist eine zweite Nase 68 auf, die weiter nach unten absteht als seine Eingreifnase 52. Diese zweite Nase 68 kommt beim Einführen des vollständig aus der erfindungsgemäßen Vorrichtung herausgenommenen Einschubs 12 in deren Gehäuse 10 in Anlage in einer Ausnehmung 70 an einem hinteren Rand 72 des Einschubs 12 (Figur 3). Dadurch wird der nach oben gekippte Gleitstein 36 zusammen mit dem Einschub 12 in Richtung eines rückwärtigen, der Öffnung 18 im Armaturenbrett 14 abgewandten Endes des Gehäuses 10 geschoben. Gegenschrägen 74 seiner Führung 34 drücken den Gleitstein 36 nach unten zurück in seine Normallage, wobei seine Eingreifnase 52 in Eingriff in die Ausnehmung 62 des Einschubs 12 gelangt. Der Formschluß zwischen Gleitstein 36 und Einschub 12 wird auf diese Weise selbsttätig beim Einführen des Einschubs 12 in das Gehäuse 10 hergestellt. Die den Verschiebeweg des Einschubs 12 begrenzenden Nasen 28 schnappen in die Längsschlitze 30 in der oberen Wand 32 des Gehäuses 10 ein, so daß der Verschiebeweg des Einschubs 12 begrenzt und dieser insbesondere nicht versehentlich vollständig aus dem Gehäuse 10 herausgezogen werden kann.

## Patentansprüche

1. Vorrichtung zum Einbau in einem Kraftwagen, mit einem schubladenartig aus einer geschlossenen in eine geöffnete Stellung ausziehbaren Einschub (12) und mit einem entriegelbaren Wegbegrenzer (28, 30) für den Einschub, **dadurch gekennzeichnet**, daß die Vorrichtung einen Gleitstein (36) aufweist, der in einer im Kraftwagen ortsfesten Führung (34) parallel zum Einschub (12) verschiebbar geführt ist und der mit dem Einschub (12) in Eingriff steht, und daß die Vorrichtung eine Aushebeeinrichtung (58, 60) aufweist, die den Gleitstein (36) außer Eingriff vom Einschub (12) bringt, wenn der Einschub (12) über seine Wegbegrenzung hinaus aus der Vorrichtung herausgezogen wird.

2. Vorrichtung nach Anspruch 1, **dadurch gekennzeichnet**, daß die Aushebeeinrichtung (58) eine Schrägfläche (60) oder eine gewölbte Fläche aufweist.

3. Vorrichtung nach Anspruch 1, **dadurch gekennzeichnet**, daß die Vorrichtung ein Federelement (46) aufweist, das den Einschub (12) öffnet.

4. Vorrichtung nach Anspruch 3, **dadurch gekennzeichnet**, daß das Federelement eine Rollfeder (46) ist.

5. Vorrichtung nach Anspruch 1, **dadurch gekennzeichnet**, daß die Vorrichtung ein Flüssigkeitsdämpfungselement (38) aufweist, das die Öffnungsbewegung des Einschubs (12) dämpft.

6. Vorrichtung nach Anspruch 1, **dadurch gekennzeichnet**, daß die Vorrichtung ein Gehäuse (10) aufweist, das zum Einbau in dem Kraftwagen vorgesehen ist und in dem der Einschub (12) verschiebbar geführt ist.

7. Vorrichtung nach Anspruch 6, **dadurch gekennzeichnet**, daß der Gleitstein (36) durch einen Längsschlitz (54) in einer Wand (32) des Gehäuses (10) hindurch mit dem Einschub (12) in Eingriff steht.

8. Vorrichtung nach Anspruch 3, **dadurch gekennzeichnet**, daß das Federelement (46) an dem Gleitstein (36) angreift.

9. Vorrichtung nach Anspruch 5, **dadurch gekennzeichnet**, daß das Flüssigkeitsdämpfungselement (38) am Gleitstein (36) angebracht ist.

## Claims

1. Device for installation in a motor vehicle, having a sliding unit (12) that can be pulled out of a closed position into an open position like a drawer, and having an unlockable displacement limiter (28, 30) for the sliding unit, **characterized in that** the device has a sliding block (36) which is guided so as to be movable parallel to the sliding unit (12) in a guide (34) arranged in a fixed position in the motor vehicle, and which engages with the sliding unit (12), and in that the device has a lifting-out means (58, 60) which disengages the sliding block (36) from the sliding unit (12) when the sliding unit (12) is pulled out of the device beyond its displacement limit.

2. Device according to Claim 1, **characterized in that** the lifting-out device (58) has an oblique surface (60) or a curved surface.

3. Device according to Claim 1, **characterized in that** the device has a spring element (46) which opens the sliding unit (12).

4. Device according to Claim 3, **characterized in that** the spring element is a scroll spring (46).

5. Device according to Claim 1, **characterized in that** the device has a fluid damping element (38) which damps the opening movement of the sliding unit (12).

6. Device according to Claim 1, **characterized in that** the device has a housing (10) which is provided for installation in the motor vehicle and in which the sliding unit (12) is guided so as to be movable.

7. Device according to Claim 6, **characterized in that** the sliding block (36) engages with the sliding unit (12) through a longitudinal slot (54) in a wall (32) of the housing (10).

8. Device according to Claim 3, **characterized in that** the spring element (46) engages with the sliding block (36).

9. Device according to Claim 5, **characterized in that** the fluid damping element (38) is mounted on the sliding block (36).

## Revendications

1. Dispositif à monter dans un véhicule automobile, comportant un tiroir (12) que l'on peut tirer à la façon d'un tiroir de meuble pour le faire passer d'une position fermée à une position ouverte ainsi qu'un limiteur de course (28, 30), déverrouillable, pour le tiroir, caractérisé par le fait que le dispositif présente un coulisseau (36) qui est guidé dans un guidage (34), fixe dans le véhicule automobile, avec liberté de coulissement parallèlement au tiroir (12) et qui vient en prise avec le tiroir (12) et que le dispositif présente un mécanisme de soulèvement (58, 60) qui amène le coulisseau (36) hors de prise d'avec le tiroir (12) lorsque l'on tire sur le tiroir (12) au-delà de sa limite de course pour le sortir hors du dispositif.

2. Dispositif selon la revendication 1, caractérisé par le fait que le mécanisme de soulèvement (58) présente une surface oblique (60) ou une surface bombée.

3. Dispositif selon la revendication 1, caractérisé par le fait que le dispositif présente un élément élastique (46) qui ouvre le tiroir (12).

4. Dispositif selon la revendication 3, caractérisé par le fait que l'élément élastique est un ressort à déroulement (46).

5. Dispositif selon la revendication 1, caractérisé par le fait que le dispositif présente un élément amortisseur à liquide (38) qui amortit le mouvement d'ouverture du tiroir (12).

6. Dispositif selon la revendication 1, caractérisé par le fait que le dispositif présente un boîtier (10) qui est prévu pour montage dans un véhicule automobile et dans lequel le tiroir (12) est guidé avec liberté de coulissement.

7. Dispositif selon la revendication 6, caractérisé par le fait que le coulisseau (36) vient en prise avec le tiroir (12) en passant par une fente longitudinale (54) prévue dans une paroi (32) du boîtier (10).

8. Dispositif selon la revendication 3, caractérisé par le fait que l'élément élastique (46) agit sur le coulisseau (36).

9. Dispositif selon la revendication 5, caractérisé par le fait que l'élément amortisseur à liquide (38) est appliqué sur le coulisseau (36).
